Europäisches Patentamt

European Patent Office

Office européen des brevets

(19)

(11) Veröffentlichungsnummer: **0 211 189**
**B1**

(12) **EUROPÄISCHE PATENTSCHRIFT**

(45) Veröffentlichungstag der Patentschrift: **14.03.90**

(21) Anmeldenummer: **86108045.5**

(22) Anmeldetag: **12.06.86**

(51) Int. Cl.⁵: **F 02 F 3/02, F 16 J 1/02**

(54) **Tauchkolben, insbesondere für Verbrennungsmotoren.**

(30) Priorität: **27.07.85 DE 3527032**

(43) Veröffentlichungstag der Anmeldung:
**25.02.87 Patentblatt 87/09**

(45) Bekanntmachung des Hinweises auf die
Patenterteilung:
**14.03.90 Patentblatt 90/11**

(84) Benannte Vertragsstaaten:
**DE FR GB IT**

(56) Entgegenhaltungen:
**EP-A-0 209 006**
**DE-A-1 475 846**
**DE-A-3 022 858**
**DE-C- 856 247**

(73) Patentinhaber: **MAHLE GMBH**
**Pragstrasse 26-46 Postfach 50 07 69**
**D-7000 Stuttgart 50 (DE)**

(72) Erfinder: **Ripberger, Emil**
**Brunnenstrasse 6**
**D-7148 Remseck (DE)**
Erfinder: **Bubeck, Eberhard**
**Friedensstrasse 17**
**D-7012 Fellbach (DE)**

Courier Press, Leamington Spa, England.

# Beschreibung

Die Erfindung betrifft einen Tauchkolben nach dem Oberbegriff des Patentanspruchs 1.

Es ist bekannt, die Außenkontur der Mantelfläche, in der die Laufflächen des Kolbens liegen, von einer im Querschnitt runden oder elliptischen Grundform abweichen zu lassen. Ebenfalls weist die Mantelfläche in Kolbenlängsrichtung in der Regel keinen geraden Verlauf auf. Die Kolben sind vielmehr meist in dieser Richtung tonnenförmig bzw. ballig geformt.

Die Querschnitte insbesondere von Leichtmetallkolben weisen in der Regel eine runde Grundform mit überlagerten Ovalitäten auf. Dabei liegt die kleine Ovalitätsachse jeweils in Kolbenbolzenrichtung.

Der Längenunterschied zwischen großer und kleiner Ovalitätsachse liegt dabei im allgemeinen in der Größenordnung von 0,1-0,8 mm.

Kolben mit im Querschnitt bereits elliptischer Grundform können ebenfalls noch entsprechende Ovalitätsüberlagerungen erhalten.

Es ist auch bekannt, die Außenkontur in Umfangsrichtung auf der Druck- und der Gegendruckseite des Kolbens unterschiedlich zu gestalten, wie z.B. in der DE-AS 12 94 740 gezeigt ist. Bei der unterschiedlichen Außenkontur auf der Druck- und Gegendruckseite verlaufen jedoch die beiden sich in Pleuelschwingebene gegenüberliegenden Mantellinien symmetrisch zur Kolbenlängsachse. Desweiteren sind die Querschnittskonturen jeweils spiegelsymmetrisch zur durch die Kolbenlängsachse verlaufenden Pleuel-Schwingebene ausgebildet.

Über diesen Stand der Technik geht die ältere nicht vorveröffentlichte europäische Patentanmeldung EP-A-0 209 006 noch insofern hinaus, daß in Druck-Gegendruck-Richtung auch die in der Pleuelschwingebene gegenüber liegenden Mantellinien unsymmetrisch zur Kolbenachse verlaufen.

Hiervon ausgehend liegt der Erfindung die Aufgabe zugrunde, die Schaftkontur noch weiter den jeweiligen Motorbetriebsverhältnissen bzw. Formabweichungen bei der Laufflächenkontur des den Kolben aufnehmenden Motorzylinders anzupassen. Damit soll letztendlich ein ruhigerer und reibungsärmerer bzw. in Extremfällen freßsicherer Lauf erreicht werden.

Gelöst wird diese Aufgabe durch einen Kolben mit einer Außenkontur nach den kennzeichnenden Merkmalen des Patentanspruchs 1.

Mit dieser Ausführung des Kolbens kann auf der Druck- und Gegendruckseite des Schaftes eines Kolbens die Ausbildung eines sich im Motorbetrieb einstellenden schiefen Tragbildes vermieden werden. Als Tragbild eines Kolbenschaftes wird üblicherweise der Bereich bezeichnet, in dem der Kolbenschaft auf der Druck- und Gegendruckseite tatsächlich an der Zylinderlaufbahn anliegt und sich beim gelaufenen Kolben aufgrund der dort erfolgten Reibung sichtbar abzeichnet. Bei einem einwandfrei laufenden Kolben bilden sich senkrecht zur in der Kolbenlängsachse liegenden Pleuelschwingebene im wesentlichen symmetrische Tragbilder aus. Es können jedoch bekanntermaßen unterschiedliche Betriebstemperaturen über den Umfang des Zylinders bestehen, die zu Zylinderverzügen führen und schiefe Tragbilder verursachen.

Die an die Zylinderlauffläche des Motors anlaufenden Kolbenaußenflächen können im Bereich der Ringpartie des Kolbens und des Kolbenschaftes auf völlig unterschiedlich gestalteten, insbesondere über den Kolbenumfang vollständig unsymmetrisch zur Achse des den Kolben aufnehmenden Motorzylinders (wenn der Kolben in diesem spielfrei anliegt) verlaufenden Mantelflächen liegen.

Die Mantelfläche des Kolbenschaftes, auf der die an der Zylinderlaufbahn anlaufenden Kolbenflächen liegen und die in dem beschriebenen Maße unsymmetrisch ausgebildet ist, soll sich entsprechend den Unteransprüchen mindestens über eine Höhe von 1/4 bis vorzugsweise 1/2 der Kolbenschafthöhe erstrecken.

Der Kolben braucht keine geschlossene Lauffläche aufzuweisen. Es kommt lediglich darauf an, daß alle Laufflächenbereiche auf der erfindungsgemäß angegebenen Außenkontur einer gedachten Mantelfläche liegen, so daß die Kolbenlauffläche auch in mehrere voneinander getrennte Einzelbereiche aufgeteilt sein kann, wenn diese Einzelbereiche nur ebenfalls in der betreffenden Mantelfläche liegen.

Ausführungsbeispiele der Erfindung sind in der Zeichnung dargestellt. Es zeigen

Fig. 1 Teilansichten eines Kolbens in um 90° versetzten Richtungen

Fig. 2a den Verlauf der Kolbenmantellinie in einer durch die Kolbenlängs- und Kolbenbolzenachse aufgespannten Ebene

Fig. 2b den Kolbenmantellinienverlauf in der Pleuelschwingebene

Fig. 3-5 den Kolbenmantellinienverlauf in drei in Fig. 1 mit III-IV angegebenen Querschnittsebenen

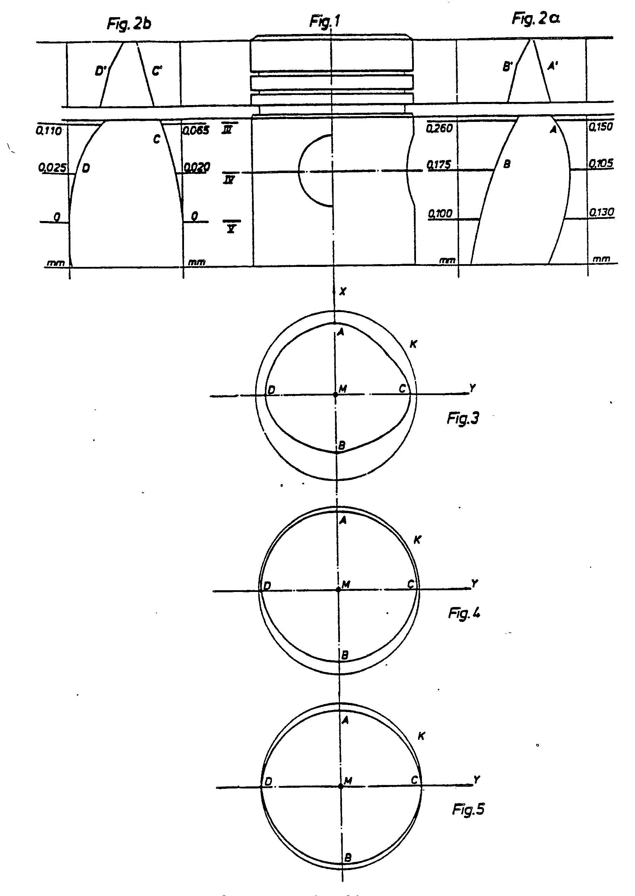

Das Ausführungsbeispiel bezieht sich auf einen Kolben aus Leichtmetall mit einem Durchmesser von etwa 110 mm. Bei den Schnitten durch den Kolben nach Fig. 3-5 bezeichnet X die Kolbenbolzenrichtung und Y die Schnittlinie der Pleuelschwingebene mit der Zeichenebene. Der Punkt C. liegt jeweils auf der Gegendruckseite des Kolbens, während der Punkt D auf der Druckseite des Kolbens liegt. Die Punkte A und B liegen auf den an die Kolbenbolzenachse angrenzenden Seiten des Kolbens.

Der Kreis K mit dem Mittelpunkt M besitzt einen Durchmesser, der dem durch den Motorzylinder vorgegebenen Nenndurchmesser entspricht, wenn der Kolben spielfrei in dem Motorzylinder anliegt. In den Figuren 2a und 2b geben die Kurven A bis D jeweils den Mantellinienverlauf des Kolbenschaftes in den entsprechenden Punkten A bis D in Kolbenlängsrichtung an. Die Kurven A' bis D' geben die betreffenden Mantellinienverläufe in der Ringpartie des Kolbens wieder.

In der Querschnittsebene, die in Fig. 3 dargestellt ist, verläuft die durch die Punkte A bis D bestimmte Mantellinienkontur über den gesamten Kolbenumfang unsymmetrisch zu der durch den punkt M markierten Achse. Inwieweit in den einzelnen Schnittebenen jeweils in den einzelnen Punkten A bis D die Kolbenmantellinie von der Kreiskontur K entfernt liegt, geben die in den Fig. 2a und 2b eingetragenen Maße deutlich an.

Die Unsymmetrie der Mantellinienumfangskontur in bezug auf ein Spiegeln an der Pleuelschwingebene wurde bei dem Ausführungsbeispiel in der angegebenen Weise gewählt, um bei dem Kolben ein schiefes Tragbild bedingt durch im Motorbetrieb leicht verzogene Zylinderlaufbahnen zu vermeiden. Dabei wurde von einem Motor ausgegangen, bei dem der Punkt A in bezug auf den Motorzylinder in der Nähe des Auslaßventiles und der Punkt B auf der Seite des Einlaßventiles liegt. Durch die angegebene Unsymmetrie der Mantellinienumfangskontur in bezug auf ein Spiegeln an der Kolbenkippebene konnte ein einwandfreies symmetrisches Tragbild auf dem Kolbenschaft erreicht werden.

**Patentansprüche**

1. Tauchkolben, insbesondere für Verbrennungsmotoren, bei dem die mit der Zylinderlaufbahn in Berührung tretenden Laufflächen auf einer Mantelfläche liegen, die in allen Querschnitten senkrecht zur Kolbenlängsachse im wesentlichen runde oder elliptische Außenkontur und in Kolbenlängsrichtung gerade oder gekrümmte Mantellinien aufweist, und bei der auf beiden Seiten einer durch die Kolbenlängs- und Kolbenbolzenachse aufgespannten Ebene liegende Mantellinien unsymmetrisch in bezug auf diese Ebene verlaufen, dadurch gekennzeichnet, daß auch die beiden sich in der durch die Kolbenbolzen- und Kolbenlängsachse aufgespannten Ebene gegenüberliegenden Mantellinien, die sich zumindest über eine nennenswerte gemeinsame Teilhöhe des Kolbens erstrecken, nicht symmetrisch zueinander verlaufen.

2. Tauchkolben nach Anspruch 1, dadurch gekennzeichnet, daß die nennenswerte gemeinsame Teilhöhe des Kolbens mindestens ein Viertel der Kolbenschafthöhe, gemessen zwischen Kolbenschaftende und Unterkante der untersten über der Bolzenachse liegenden Kolbenringnut beträgt.

3. Tauchkolben nach Anspruch 2, dadurch gekennzeichnet, daß die gemeinsame Teilhöhe mindestens die Hälfte der Schafthöhe mißt.

**Revendications**

1. Piston plongeur, notamment pour moteur à combustion interne, dans lequel les surfaces de portée qui viennent en contact avec les bandes de portée du cylindre se trouvent sur une surface enveloppe, dont, dans toutes les coupes perpendiculaires à l'axe longitudinal de ce piston, le contour extérieur est sensiblement circulaire ou elliptique, piston qui comporte, dans le sens longitudinal, des génératrices rectilignes ou courbes et dans lequel, des deux côtés d'un plan défini par l'axe longitudinal du piston et l'axe de son tourillon, ces génératrices sont asymétriques par rapport à ce plan, piston caractérisé en ce que les deux génératrices, qui se font vis-à-vis dans le plan défini par l'axe du tourillon et l'axe longitudinal du piston et qui s'étendent sur au moins une partie commune appréciable de la hauteur du piston, ne sont également pas symétriques.

2. Piston plongeur selon la revendication 1, caractérisé en ce que la partie commune appréciable de la hauteur de piston est égale à au moins un quart de la hauteur de la jupe, mesurée entre l'extrémité de cette jupe et le bord inférieur de la plus basse des gorges de segment qui se trouvent au-dessus du tourillon.

3. Piston plongeur selon la revendication 2, caractérisé en ce que la partie commune appréciable de la hauteur est égale à au moins la moitié de la hauteur de la jupe.

**Claims**

1. A plunger piston, particularly for internal combustion engines, in which the working surfaces which come in contact with the cylinder liner lie on a cylindrical surface which in all cross-sections comprises at right-angles to the longitudinal axis of the piston substantially round or elliptical outer contours and in the longitudinal direction of the piston straight or curved generatrices, and in which, on both sides of a plane extending through the longitudinal and gudgeon pin axes of the piston, generatrices extend asymmetrically in respect of this plane, characterised in that also the two generatrices which, opposite each other, extend through the plane containing the gudgeon pin and longitudinal axes of the piston and which extend at least over a substantial and common partial height of the piston, do not extend symmetrically in relation to each other.

2. A plunger piston according to Claim 1, characterised in that the substantial common partial height of the piston amounts to at least one quarter of the height of the piston body, measured between the end of the piston body and the bottom edge of the lowest piston ring groove which is situated above the gudgeon pin axis.

3. A plunger piston according to Claim 2, characterised in that the common partial height amounts to at least half of the height of the body.

EP 0 211 189 B1

Fig. 2b   Fig.1   Fig. 2a

Fig.3

Fig. 4

Fig.5

1